# EUROPÄISCHE PATENTSCHRIFT

(11) **EP 4 116 903 B1**
(45) Veröffentlichungstag und Bekanntmachung des Hinweises auf die Patenterteilung: **07.02.2024**
(21) Anmeldenummer: 21184534.2
(22) Anmeldetag: 08.07.2021
(51) Int. Cl.: G06Q 10/083, G06Q 10/0832, B60P 3/00, G06Q 50/28

(54) **LIEFERFAHRZEUG UND VERFAHREN ZUR AUSLIEFERUNG VON WAREN MITHILFE EINES LIEFERFAHRZEUGES**
DELIVERY VEHICLE AND METHOD FOR DELIVERING GOODS USING A DELIVERY VEHICLE
VÉHICULE DE LIVRAISON ET PROCÉDÉ DE LIVRAISON DES MARCHANDISES À L'AIDE D'UN VÉHICULE DE LIVRAISON

(43) Veröffentlichungstag der Anmeldung: 11.01.2023
(73) Patentinhaber: ALDI SÜD Dienstleistungs-GmbH & Co. oHG, 45476 Mülheim/Ruhr (DE)
(72) Erfinder: KRONE, Jürgen, 50858 Köln (DE); VEISER, Michael, 45470 Mülheim an der Ruhr (DE)
(74) Vertreter: Andrejewski - Honke Patent- und Rechtsanwälte Partnerschaft mbB

(56) Entgegenhaltungen:
- EP-A1- 1 300 348
- WO-A1-2006/101463
- DE-A1-102017 011 550
- DE-A1-102019 200 504

## Beschreibung

Die Erfindung betrifft ein Lieferfahrzeug, insbesondere bemanntes oder unbemanntes Elektro-Lieferfahrzeug, zur Auslieferung von Waren, insbesondere Lebensmittelwaren, in Lieferboxen, mit einer Ladefläche, und mit wenigstens einem mehrere Lieferboxen aufnehmenden Rahmen, welcher auf der Ladefläche positioniert gehalten und zur Kommissionierung mit den Lieferboxen von der Ladefläche wieder entfernt werden kann, wobei die Lieferboxen jeweils eine durch die Kommissionierung vorbestimmte Position im Rahmen einnehmen, wobei ferner die Kommissionierung ganz oder teilweise mithilfe einer Steuereinheit vorgegeben wird, und wobei die Kommissionierung einen Positionsbelegungsplan für sämtliche Lieferboxen im Rahmen vorgibt.

Lieferfahrzeuge für den Warenverkehr und insbesondere zur Auslieferung von Waren sind in vielfältiger Ausgestaltung bekannt. Der Antrieb der Lieferfahrzeuge kann dabei herkömmlich mit Verbrennungsmotoren erfolgen. Zunehmend werden jedoch Elektromotoren und Akkumulatoren als Energiequelle eingesetzt, weil eine standortnahe regionale Auslieferung zum einen favorisiert wird und zum anderen Elektro-Lieferfahrzeuge problemlos in beispielsweise Fußgängerzonen, verkehrsberuhigten Gebieten etc. eingesetzt werden können. Hinzu kommt, dass die Auslieferung der Waren mit Elektro-Lieferfahrzeugen mit praktisch keinen Emissionen weder im Hinblick auf Lärm noch lokale Verbrennungsgase verbunden ist, so dass solche Elektro-Lieferfahrzeuge über eine hohe Akzeptanz verfügen.

Im Stand der Technik gibt es bereits verschiedene Ansätze, um solche Lieferfahrzeuge und insbesondere Elektro-Lieferfahrzeuge zu realisieren.

Beispielsweise ist durch die US 2015/0006005 A1 ein autonomes und unbemanntes Lieferfahrzeug für den Warenverkehr bekannt geworden. Hier stehen jedoch primär konstruktive Ausgestaltungen des unbemannten Lieferfahrzeuges im Fokus und spielt die Aufnahme der Waren auf einer Ladefläche eine nur untergeordnete Rolle. Tatsächlich ist die Ladefläche an dieser Stelle mit einer Tür verschlossen, so dass die Waren bzw. Produkte erst nach Öffnen der Tür entnommen werden können.

Darüber hinaus wird in der DE 10 2019 209 625 A1 die generelle Liefermöglichkeit mithilfe eines Kraftfahrzeuges beschrieben. Dabei werden auch Inhaltsinformationen eines Übergabebehälters im Zuge des Liefervorganges berücksichtigt.

Beim weiteren Stand der Technik nach der DE 20 2018 006 094 U1 geht es um ein autonomes Kraftfahrzeug, auf dessen Ladefläche unter anderem ein Trolli positioniert werden kann. Der Trolli bzw. der auf diese Weise zur Verfügung gestellte Rahmen ist im weitesten Sinne auch zur Aufnahme einer oder mehrerer Lieferboxen geeignet. Außerdem lässt sich der Rahmen von der Ladefläche entnehmen bzw. auf dieser positionieren und halten.

Beim gattungsbildenden Stand der Technik nach der WO 2006/101 463 A1 geht es um ein Verteilsystem, bei dem Lieferboxen in einen Rahmen und der Rahmen auf die Ladefläche eines Lieferfahrzeuges überführt werden. Dabei kommt auch eine Steuereinheit zur Sprache, die einen Positionsbelegungsplan vorgibt. Etwaige Überlegungen dahingehend, die Lieferboxen anhand ihres Gewichtes sowie unter Berücksichtigung fahrdynamischer Aspekte zu positionieren, finden hierbei keinen Niederschlag.

Bei einem Verfahren sowie einem System zum Beladen eines Lieferfahrzeuges entsprechend der DE 10 2017 011 550 A1 wird so vorgegangen, dass eine Mehrzahl von Ladegütern bzw. Containern mithilfe einer Sortiereinrichtung in Abhängigkeit von einer Lieferroute und einer Lieferadresse des jeweiligen Ladegutes angeordnet wird. Dabei kommt auch eine Kennung als sogenannte Paket-DNA zur Sprache, deren konkrete Auslegung und Erzeugung jedoch offen bleibt.

Der Stand der Technik hat sich grundsätzlich bewährt, wenn es darum geht, Waren beispielsweise in einer zugehörigen Lieferbox an Kunden bzw. Bestimmungsorte der Lieferung mithilfe der einzelnen beschriebenen Lieferfahrzeuge zu übermitteln. Allerdings erfolgt die Beladung des Rahmens bzw. der Ladefläche der bekannten Lieferfahrzeuge heutzutage überwiegend noch randomisiert bzw. wird vom Fahrer vorgenommen, indem dieser beispielsweise die Lieferboxen respektive Waren nach der Reihenfolge der Anfahrt der einzelnen Kunden bzw. Bestimmungsorte auf der Ladefläche nach eigenem Gusto sortiert. Eine solche Vorgehensweise berücksichtigt allerdings die Fahrdynamik des Lieferfahrzeuges und seine etwaigen Änderungen im Betrieb ebenso wenig wie spezifische Anforderungen am Lieferort respektive Bestimmungsort. Beispielsweise ist es denkbar, dass am Lieferort bzw. Bestimmungsort die Ware oder Lieferbox an einer Position auf der Ladefläche befindlich ist, von der sie nur schwer oder mit erheblichem Aufwand des Fahrers entnommen werden kann.

Als Folge hiervon sind in der Praxis solche Lieferfahrzeuge oftmals in Verkehrsunfälle involviert. Außerdem wird das Lieferpersonal durch vielfach unnötige Umladeprozesse körperlich und psychisch belastet, zumal die Lieferungen heutzutage eng getaktet durchgeführt werden sollen. Hier will die Erfindung insgesamt Abhilfe schaffen.

Der Erfindung liegt das technische Problem zugrunde, ein derartiges Lieferfahrzeug zur Verfügung zu stellen, welches im Betrieb ein gegenüber dem Stand der Technik verringertes Unfallrisiko zeigt und ergonomische Verbesserungen für das Fahrpersonal bietet. Außerdem soll ein hierfür besonders geeignetes Verfahren zur Auslieferung von Waren mithilfe eines solchen Lieferfahrzeuges zur Verfügung gestellt werden.

Zur Lösung dieser technischen Problemstellung ist ein gattungsgemäßes Lieferfahrzeug im Rahmen der Erfindung dadurch gekennzeichnet, dass die Steuereinheit den Positionsbelegungsplan anhand von Stammdaten für die auszuliefernden Waren ebenso wie Stammdaten der die Waren empfangenden Kunden vorgibt, wobei hierbei zusätzlich Konstruktionsdaten des Lieferfahrzeugs berücksichtigt werden, nämlich die Lage seines Schwerpunktes in unbeladenem Zustand, und wobei der Positionsbelegungsplan mit höchster Priorität so aufgestellt wird, dass die Lieferboxen mit größtem Gewicht die schwerpunktnächste Position im Positionsbelegungsplan einnehmen. Der Begriff Steuereinheit ist dabei erfindungsgemäß weit auszulegen.

Tatsächlich handelt es sich bei der Steuereinheit im einfachsten Fall um einen Rechner mit zugehöriger Software. Dieser kann darüber hinaus Daten über ein Computernetzwerk, beispielsweise das Internet, empfangen und austauschen. In der Steuereinheit sind dabei im Regelfall sowohl Stammdaten sämtlicher auszuliefernder Waren als auch der Kunden hinterlegt bzw. verfügbar. Die Stammdaten über die Waren enthalten in diesem Zusammenhang in der Regel Angaben über die Art der Ware, ihr Gewicht, die zugehörige Gebindegröße, ein etwaiges Verfallsdatum, den Preis der Ware etc. Bei den Stammdaten über die anzufahrenden Kunden handelt es sich um sämtliche in diesem Zusammenhang erforderlichen Daten, beispielsweise den Ansprechpartner, den genauen Bestimmungsort, etwaige topologische Besonderheiten des Bestimmungsortes, gegebenenfalls Einschränkungen der Lieferzeit am Bestimmungsort usw.

Anhand dieser Stammdaten lassen sich im Rahmen eines in der Steuereinheit hinterlegten Algorithmus Kommissionierkriterien entwickeln und ableiten, die im Endeffekt einen Positionsbelegungsplan für sämtliche Lieferboxen im Rahmen vorgeben. Das wird anschließend noch näher erläutert werden. Die Steuereinheit ist zu diesem Zweck typischerweise am Ort eines Warenverteilzentrums als Kommissionierort vorgesehen und platziert und gibt an dieser Stelle den Positionsbelegungsplan für die sämtlichen Lieferboxen im Rahmen des betreffenden Lieferfahrzeuges vor. Ausgehend von dem Warenverteilzentrum erfolgt dann die Belieferung der einzelnen Kunden. Die Belieferung erfolgt dabei im Rahmen der Distributionslogistik ausgehend von dem Warenverteilzentrum nach dem sogenannten "Milchmann-Prinzip". Dabei wird insgesamt versucht, die Transportkosten durch eine optimierte Routenfestlegung des Lieferfahrzeuges zu reduzieren. Erfindungsgemäß steht zusätzlich die Steigerung der Sicherheit hinsichtlich der Fahrdynamik des betreffenden Lieferfahrzeuges ebenso wie die verbesserte Ergonomie für den Fahrer im Vordergrund.

Aus diesem Grund ist die Auslegung erfindungsgemäß so getroffen, dass die zuvor bereits angesprochene Kommissionierung den Positionsbelegungsplan für sämtliche Lieferboxen im Rahmen vorgibt. Anders ausgedrückt, wird mithilfe der Kommissionierung, das heißt dem Zusammenstellen der gewünschten Waren nach von den Kunden vorgegebenen Aufträgen aus dem Gesamtsortiment eines Warenhändlers, der Positionsbelegungsplan der Lieferboxen auf der Ladefläche im Rahmen vorgegeben, und zwar für sämtliche Lieferboxen. Die Kommissionierung und der daraus resultierende Positionsbelegungsplan werden dabei - wie beschrieben - mithilfe der Steuereinheit vorgegeben.

Nach vorteilhafter Ausgestaltung wird der Positionsbelegungsplan der Lieferboxen im Rahmen in Abhängigkeit einer oder mehrerer Kommissionierkriterien erstellt. Die Kommissionierkriterien werden dabei ihrerseits aus den Stammdaten der Waren und der Kunden sowie Konstruktionsdaten des Lieferfahrzeuges abgeleitet. Tatsächlich ist die Auslegung so getroffen, dass als Kommissionierkriterien erfindungsgemäß das Gewicht der Lieferbox, die Reihenfolge der Entladung der Lieferbox, der Bestimmungsort der Lieferung, die Ausrichtung der Lieferbox am Bestimmungsort, der Zeitpunkt der Entladung der Lieferbox, die Haltbarkeit der Ware in der Lieferbox, etwaige Einschränkungen der Lieferzeit am Bestimmungsort etc. einzeln oder kumulativ berücksichtigt werden.

Das Gewicht der Lieferbox als erfindungsgemäßes Kommissionierkriterium kann dabei seitens der Steuereinheit aus den Stammdaten der einzelnen in der Lieferbox aufgenommenen Waren in Verbindung mit dem Eigengewicht der Lieferbox abgeleitet werden. Dabei wird man generell so vorgehen, dass wenigstens eine Lieferbox je anzufahrendem Kunden mit den gewünschten Waren ausgerüstet wird. Selbstverständlich können auch mehrere Lieferboxen für einen Kunden kommissioniert werden. Darüber hinaus besteht im Rahmen der Erfindung auch die Möglichkeit, dass sich mehrere Kunden eine (einzige) Lieferbox teilen.

Die Ausrichtung der Lieferbox am Bestimmungsort trägt der Tatsache Rechnung, dass die Lieferbox im Rahmen beispielsweise von der Fahrerseite oder der Beifahrerseite her von der Ladefläche entnommen werden kann. Je nachdem, wie sich der Bestimmungsort topologisch darstellt und eine Entnahme von der Fahrerseite oder der Beifahrerseite her am günstigsten ist, wird folglich in Abhängigkeit vom Bestimmungsort und dessen topologischen Besonderheiten die Ausrichtung der Lieferbox im Rahmen und damit am Bestimmungsort als Kommissionierkriterium verarbeitet.

Darüber hinaus spielen natürlich auch der Zeitpunkt der Entladung der Lieferbox, die Haltbarkeit der Ware in der Lieferbox oder etwaige Einschränkungen der Lieferzeit am Bestimmungsort für die Kommissionierung eine Rolle und werden deshalb als jeweiliges Kommissionierkriterium abgebildet. Die einzelnen Kommissionierkriterien können dabei jeweils für sich genommen oder auch kumulativ eine Berücksichtigung erfahren, nämlich bei der hieraus abgeleiteten Erstellung des Positionsbelegungsplanes für die Lieferboxen mithilfe der Steuereinheit.

Von besonderer erfinderischer Bedeutung ist nun der Umstand, dass die einzelnen Kommissionierkriterien im Hinblick auf die Fahrdynamik des Lieferfahrzeuges priorisiert sind. Das heißt, die einzelnen zuvor angegebenen und beispielhaft erläuterten Kommissionierkriterien werden in eine Prioritätenreihenfolge gebracht und je nach ihrer Priorität zur Ableitung des Positionsbelegungsplanes berücksichtigt. Dabei spielen Kommissionierkriterien mit höherer Priorität naturgemäß eine größere Rolle bzw. ihnen wird ein größeres Gewicht bei der Erstellung des Positionsbelegungsplanes mithilfe der Steuereinheit zugemessen als solchen mit niedrigerer Priorität.

Tatsächlich wird in diesem Zusammenhang in der Regel so vorgegangen, dass die Lieferboxen je nach ihrem Gewicht, beginnend mit dem höchsten Gewicht vorteilhaft eine schwerpunktnächste Position im Positionsbelegungsplan einnehmen. Das heißt, der Positionsbelegungsplan wird mit höchster Priorität so aufgestellt, dass die Lieferboxen mit höchstem bzw. größtem Gewicht die schwerpunktnächste Position im Positionsbelegungsplan einnehmen.

Hierbei geht die Erfindung von der Erkenntnis aus, dass das erfindungsgemäße Lieferfahrzeug in unbeladenem Zustand über eine Position des Schwerpunktes verfügt, die insbesondere bei einem Elektro-Lieferfahrzeug und unbeladener Ladefläche aufgrund der typischerweise unterhalb der Ladefläche positionierten Akkumulatoren bei einem solchen Elektro-Lieferfahrzeug in der Regel hinter einer Fahrerkabine, unterhalb der Ladefläche und im Frontbereich der Ladefläche zentral angesiedelt ist. Diese Schwerpunktlage ist im Allgemeinen einer Fahrerprobung zugrunde gelegt worden und die Fahrdynamik des Lieferfahrzeuges ist an eine solche Position angepasst.

Erfindungsgemäß erfolgt nun die Kommissionierung und die Erstellung des Positionsbelegungsplanes für die sämtlichen Lieferboxen im anschließend auf der Ladefläche positionierten Rahmen derart, dass die Lieferboxen mit höchstem Gewicht in der Regel am schwerpunktnächsten auf der Ladefläche platziert werden. Diesem Kommissionierkriterium kommt also meistens die höchste Priorität zu. Das korrespondiert im Beispielfall dazu, dass die Lieferboxen mit dem höchsten Gewicht im Frontbereich der Ladefläche und an ihrem Boden eine Anordnung finden. Falls dieser Platz belegt ist oder eine Vielzahl an Lieferboxen mit relativ hohem Gewicht transportiert werden muss, sieht der Positionsbelegungsplan vor, dass diese Lieferboxen dann zumindest fahrbahnnächste Positionen im Positionsbelegungsplan einnehmen, das heißt eine Anordnung unmittelbar auf dem Boden der Ladefläche erfahren.

Als weiteres wesentliches Kommissionierkriterium mit meistens zweiter Priorität im Hinblick auf die Fahrdynamik des Lieferfahrzeuges reflektiert der Positionsbelegungsplan den Umstand bzw. die Reihenfolge der Entladung der jeweiligen Lieferbox als ebenfalls zu priorisierendes Kommissionierkriterium. Hierbei geht die Erfindung von der Erkenntnis aus, dass die Lieferboxen je nach der Reihenfolge ihrer Entladung vorteilhaft jeweils wechselweise rechts und links einer Fahrzeuglängsachse ihre Position im Positionsbelegungsplan einnehmen. Dadurch ist sichergestellt, dass die Lieferboxen beim Auslieferungsvorgang und dem anschließenden Entladen wechselweise jeweils rechts und links der Fahrzeuglängsebene aus dem Rahmen entnommen werden, so dass es hierdurch nicht zu einer wesentlichen Änderung der Position des Schwerpunktes und damit der Fahrdynamik des Lieferfahrzeuges beim anschließenden Betrieb kommt. Die wechselweise Anordnung der Lieferboxen rechts und links der Fahrzeuglängsebene ist dabei selbstverständlich nicht zwingend. Das heißt, an dieser Stelle können beispielsweise die Lieferboxen auch so auf der Fahrerseite oder der Beifahrerseite angeordnet werden, dass zwei Kunden nacheinander von der Fahrerseite aus mit den zugehörigen Lieferboxen beliefert werden.

Für den Fall, dass die Lieferboxen je nach der Reihenfolge ihrer Entladung jeweils wechselweise rechts und links einer Fahrzeuglängsebene ihre Position im Positionsbelegungsplan einnehmen, werden ausdrücklich Situationen vermieden, bei denen beispielsweise die Lieferboxen während einer Tour bzw. eines Auslieferungsvorganges auf nur einer Seite im Rahmen platziert sind, beispielsweise nur auf der Fahrerseite oder nur auf der Beifahrerseite. Denn das könnte zur Folge haben, dass beispielsweise bei einer Entnahme von zwei oder drei oder noch mehr Lieferboxen an der betreffenden Fahrerseite oder Beifahrerseite das erfindungsgemäße Lieferfahrzeug während der betreffenden Tour anschließend nicht nur "schräg" aufgrund der ungleichmäßigen Gewichtsverteilung steht und somit das Fahrwerk asymmetrisch belastet wird, sondern hierdurch insbesondere die Sicherheit und Fahrdynamik verschlechtert wird. Das wird erfindungsgemäß dadurch vermieden, dass als weiteres zu priorisierendes Kommissionierkriterium neben dem Gewicht der Lieferboxen an zweiter Stelle die Reihenfolge der Entladung der betreffenden Lieferbox Berücksichtigung findet und sich im Positionsbelegungsplan entsprechend niederschlägt.

Der Positionsbelegungsplan kann - wie bereits erläutert - in der Steuereinheit am Kommissionierort bzw. im oder am Warenverteilzentrum des die Warenverteilung vornehmenden Warenhändlers hinterlegt werden. Zusätzlich hat es sich aber auch als besonders günstig erwiesen, wenn der Positionsbelegungsplan in einer mobilen und/oder fahrzeuggebundenen Steuereinheit hinterlegt ist. Bei dieser mobilen Steuereinheit kann es sich im einfachsten Fall um ein Smartphone, Tablet oder dergleichen handeln, welches vom Fahrer des Lieferfahrzeuges mitgeführt wird. Auf diese Weise ist der Fahrer über den Positionsbelegungsplan unmittelbar in der Lage, die dort vorgegebene Entladungsreihenfolge der einzelnen Lieferboxen aus dem Rahmen umzusetzen. Außerdem können in der fraglichen mobilen Steuereinheit auch ergänzende Informationen an den Fahrer hinsichtlich des Bestimmungsortes, etwaiger Einschränkungen hinsichtlich der Lieferzeit sowie beispielsweise vereinbarte Liefertermine etc. hinterlegt werden, um den Fahrer umfassend über die auszuführende Lieferung, den Kunden usw. informieren zu können. Die fragliche mobile Steuereinheit kann dabei selbstverständlich auch ergänzend oder alternativ im Lieferfahrzeug vorhanden sein, beispielsweise mit einem ohnehin im Inneren der Fahrerkabine vorhandenen Bildschirm kommunizieren und auf diesem den Positionsbelegungsplan für den Fahrer wiedergeben. Grundsätzlich kann der Positionsbelegungsplan aber auch in Papierform vorliegen, so dass der Fahrer in einem solchen Fall anhand einer solchen papierbasierten ausgedruckten Liste vorgeht und die einzelnen Lieferungen abarbeitet.

Der Rahmen wird in der Regel am Kommissionierort, das heißt im Warenverteilzentrum, mit den Lieferboxen bestückt. Anschließend wird der auf diese Weise nach dem Positionsbelegungsplan mit den Lieferboxen bestückte Rahmen als Ganzes in ein Transportgestell auf der Ladefläche des Lieferfahrzeuges eingeschoben. Das heißt, die Ladefläche ist vorteilhaft mit dem fraglichen Transportgestell ausgerüstet, welches den Rahmen aufnimmt. Der Rahmen wird dabei in der Regel gegenüber dem Transportgestell lösbar verriegelt, so dass der Rahmen während des Transportes sicher und unverrückbar in dem Transportgestell auf der Ladefläche gehalten wird.

Um den Rahmen beispielsweise im Warenverteilzentrum zuvor einwandfrei bestücken und bewegen zu können, verfügt der Rahmen typischerweise über unterseitige Transportrollen und darüber hinaus über Schubfächer zur Aufnahme der Lieferboxen. Hierbei geht die Erfindung von der Erkenntnis aus, dass es sich bei den Lieferboxen um generell jegliche Arten an Transportboxen zur Kommissionierung von Waren handelt. Da erfindungsgemäß im Allgemeinen Lebensmittelwaren transportiert werden, sind die Lieferboxen geschlossen ausgebildet, verfügen also über einen Korpus und einen den Korpus verschließenden Deckel. Der Korpus und der Deckel sind dabei in der Regel aus einem Kunststoff und insbesondere geschäumten Kunststoff hergestellt, um die im Inneren aufgenommenen Waren und insbesondere Lebensmittelwaren vor störenden Temperatureinflüssen zu bewahren. Außerdem lassen sich solche Lieferboxen aus geschäumten Kunststoffen besonders geräuschdämpfend in ihren jeweiligen Schubfächern im Inneren des Rahmens aufnehmen und transportieren. Ferner verfügen solche Lieferwagen aus geschäumten Kunststoffen über ein geringes Gewicht.

Die Anbringung der Schubfächer in dem Rahmen erfolgt vorteilhaft jeweils quer zur Fahrzeuglängsrichtung und jeweils ausgehend von der Fahrzeuglängsrichtung sich gegenüberliegend im Rahmen. Dadurch lassen sich die einzelnen Lieferboxen - wie beschrieben - jeweils von der Fahrerseite oder der Beifahrerseite unschwer von der Ladefläche entnehmen. Dazu ist das erfindungsgemäße Lieferfahrzeug in der Regel mit einem festen Dach bzw. einer festen Dachfläche ausgerüstet und verfügt über seitliche und einen rückwärtigen Vorhang, die am Bestimmungsort unschwer seitlich weggeklappt, hochgerollt oder sonst wie schnell entfernt werden können, um den Zugang zu dem Rahmen und damit den verschiedenen Lieferboxen zur Verfügung zu stellen.

Nach weiterer vorteilhafter Ausgestaltung sind die Lieferboxen schließlich noch mit wenigstens einem Identifizierungsmittel ausgerüstet. Bei dem Identifizierungsmittel kann es sich im einfachsten Fall schlicht und ergreifend um einen Aufdruck bzw. ein Etikett handeln, welches u. a. die Lieferreihenfolge vorgibt. Bietet der auf der Ladefläche aufgenommene Rahmen beispielsweise Platz für insgesamt 36 Lieferboxen, so gibt der Aufdruck beispielsweise über die Lieferreihenfolge Auskunft, und zwar von 1 bis 36. Die Lieferreihenfolge ist dabei selbstverständlich nicht an eine bestimmte Position der Lieferbox im Rahmen geknüpft. Das heißt, die Lieferreihenfolge wird durch den Positionsbelegungsplan vorgegeben, der wiederum die Belegung des Rahmens mit den einzelnen Lieferboxen reflektiert. Das gilt selbstverständlich nur beispielhaft und ist keinesfalls einschränkend zu verstehen.

Das erfindungsgemäße Lieferfahrzeug verfügt in der Regel über eine Nutzlast von mehr als 300 kg und meistens sogar mehr als 500 kg bis zu 1.000 kg, 2.000 kg oder noch mehr, so dass die anzufahrenden Kunden überwiegend in einem geringen Radius um das Warenverteilzentrum angesiedelt sind, beispielsweise innerhalb eines Radius von max. 50 km, so dass in Verbindung mit der Nutzlast Elektro-Lieferfahrzeuge an dieser Stelle prädestiniert sind und Reichweitenprobleme nicht auftreten können. Selbstverständlich können an dieser Stelle auch herkömmliche Lieferfahrzeuge mit Verbrennungsmotor oder auch solche mit Brennstoffzelle oder wie auch immer zum Einsatz kommen, wie dies einleitend bereits beschrieben worden ist.

Bei dem einen oder den mehreren Identifizierungsmitteln für die betreffende Lieferbox kann es sich neben beispielsweise aufgedruckten Etiketten mit Zahlen, Barcode, QR-Code usw. ganz grundsätzlich aber auch um elektronische Identifizierungsmittel handeln. Solche Transponder bieten den Vorteil, dass sie dauerhaft in oder an der Lieferbox verbleiben können. Beispielsweise ist es denkbar, einen solchen Transponder bzw. ein elektronisches Identifizierungsmittel von vornherein und herstellerseitig in die betreffende Lieferbox zu integrieren. Jedenfalls eröffnet ein solches elektronisches Identifizierungsmittel nicht nur die Möglichkeit, dass das besagte Identifizierungsmittel beispielsweise mithilfe der vom Fahrer mitgeführten mobilen Steuereinheit unschwer ausgelesen werden kann, sondern besteht darüber hinaus noch die Option, dass das betreffende elektronische Identifizierungsmittel im Zusammenhang mit der Erstellung des Positionsbelegungsplanes seitens der Steuereinheit im Warenverteilzentrum bzw. am Kommissionierort jeweils programmiert wird.

Dabei wird in dem fraglichen elektronischen Identifizierungsmittel wenigstens die Reihenfolge der Entladung der betreffenden Lieferbox hinterlegt, können allerdings auch zuvor angesprochene Zusatzinformationen wie beispielsweise eine begrenzte Haltbarkeit der hierin aufgenommenen Lebensmittelwaren, ihre besondere Temperaturempfindlichkeit etc. hinterlegt werden. Dadurch wird der Fahrer nach Auslesen des betreffenden Identifizierungsmittels nicht nur über die Reihenfolge der Entladung der betreffenden Lieferbox unterrichtet, sondern beispielsweise auch darüber, was sich im Inneren der Lieferbox befindet, ob die Lebensmittelwaren im Beispielfall eine besondere Behandlung erfordern etc.

Gegenstand der Erfindung ist auch ein Verfahren zur Auslieferung von Waren und insbesondere Lebensmittelwaren in Lieferboxen mithilfe des beschriebenen Lieferfahrzeuges. Im Ergebnis werden ein Lieferfahrzeug und ein Verfahren zur Auslieferung von Waren mithilfe des Lieferfahrzeuges zur Verfügung gestellt, welche besondere Vorteile hinsichtlich der Sicherheit und Ergonomie zur Verfügung stellen. Tatsächlich stellt die Erfindung sicher, dass sich die Fahrdynamik des Lieferfahrzeuges durch den Beladevorgang mit den Lieferboxen und den Entladevorgang im Regelfall nicht oder nur unwesentlich gegenüber dem unbeladenen Zustand ändert. Dieser fahrdynamisch günstige Zustand wird auch während des gesamten Entladeprozesses beibehalten.

Hinzukommt, dass die Entnahme der Lieferboxen etwaige Besonderheiten am Bestimmungsort reflektiert. Das kann im einfachsten Fall darauf hinauslaufen, dass ein Kunde, dessen Bestimmungsort nur über die Fahrerseite zum Entladen vernünftig angefahren werden kann, seine zugehörigen Lieferboxen erhält, indem diese zuvor im Rahmen des Positionsbelegungsplanes eine Anordnung auf eben dieser Fahrerseite von vornherein erfahren haben. Dadurch wird der Fahrer nicht mit ungünstigen Entladeverhältnissen konfrontiert, sondern ist das Entladen ergonomisch besonders vorteilhaft zu bewerkstelligen. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: Das Lieferfahrzeug in einer perspektivischen Übersicht mit auf der Ladefläche befindlichem Rahmen und einzelnen in Schubfächer eingeschobenen Lieferboxen,
- Fig.: eine Heckansicht des Lieferfahrzeuges nach der Fig. 1 und
- Fig. 3: den Rahmen ohne Lieferboxen im Warenverteilzentrum bei seiner Bestückung.

In den Figuren ist ein Lieferfahrzeug dargestellt, bei dem es sich nach dem Ausführungsbeispiel und nicht einschränkend um ein bemanntes Elektro-Lieferfahrzeug handelt. Das fragliche Elektro-Lieferfahrzeug ist zu diesem Zweck mit einer Fahrerkabine 1 und einer sich rückwärtig an die Fahrerkabine 1 anschließenden Ladefläche 2 ausgerüstet. Man erkennt, dass die Ladefläche 2 zu einem offenen Kofferaufbau mit geschlossener Dachfläche 3, offenen Seitenwänden 4 sowie einer ebenfalls offenen Heckwand 5 korrespondiert. Die Seitenwände 4 und auch die Heckwand 5 könne dabei jeweils mit nicht ausdrücklich dargestellten Falt- oder Rollrollos, Kunststoffplanen etc. verschlossen werden, die sich unschwer öffnen und wieder verschließen lassen, um auf der Ladefläche 2 insgesamt aufgenommene Lieferboxen 6 problemlos entnehmen zu können.

Bei den Lieferboxen 6 handelt es sich im Ausführungsbeispiel um Lieferboxen 6 zur Aufnahme von nicht ausdrücklich dargestellten Lebensmittelwaren. Dazu sind die Lieferboxen 6 jeweils mit einem Grundkörper bzw. Korpus 6a und einem den Grundkörper 6a lösbar verschließenden Deckel 6b ausgerüstet. Nach dem Ausführungsbeispiel sind sowohl der Grundkörper 6a als auch der Deckel 6b aus einem geschäumtem Kunststoff hergestellt. Das gilt selbstverständlich nur beispielhaft und ist nicht einschränkend zu verstehen.

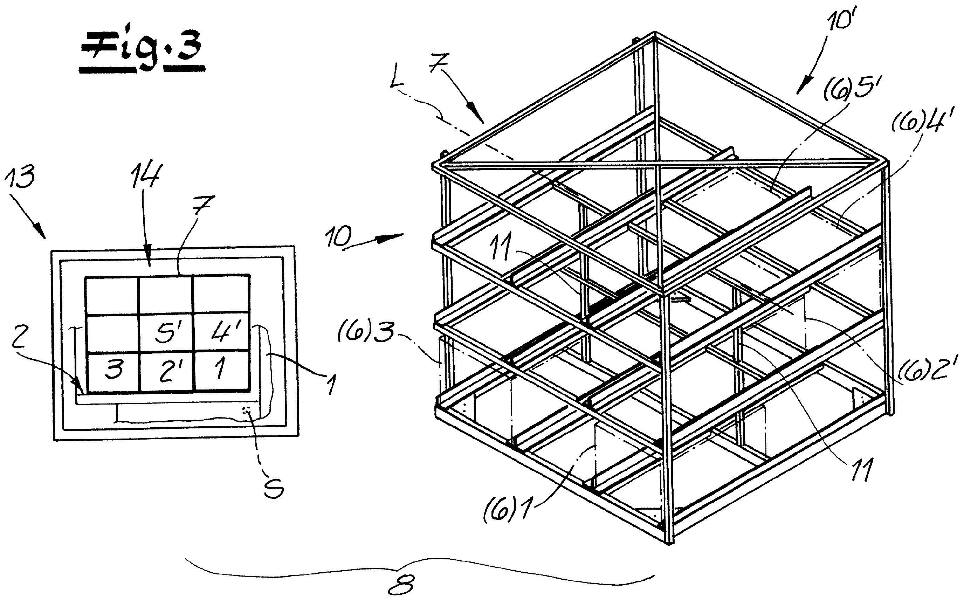

Die einzelnen Lieferboxen 6 werden dabei in einem für sich und im Detail in der Fig. 3 dargestellten Rahmen 7 aufgenommen. Der Rahmen 7 kann dabei auf der Ladefläche 2 platziert und mit dem offenen Kofferaufbau lösbar verriegelt werden, um den Rahmen 7 gegenüber der Ladefläche 2 festzulegen. Die Ladefläche 2 und die Dachfläche 3 definieren in diesem Zusammenhang und zusammengenommen ein Transportgestellt 2, 3 in welches der Rahmen 7 eingeschoben und hierin lösbar verriegelt wird. Um den Rahmen 7 im Zuge der Beladung mit den einzelnen Lieferboxen 6 im Inneren eines in der Fig. 3 lediglich angedeuteten Warenverteilzentrums 8 hin- und herbewegen zu können, verfügt der Rahmen 7 über mehrere unterseitige Transportrollen 9. Außerdem ist der Rahmen 7 mit einzelnen Schubfächern 10, 10', ausgerüstet.

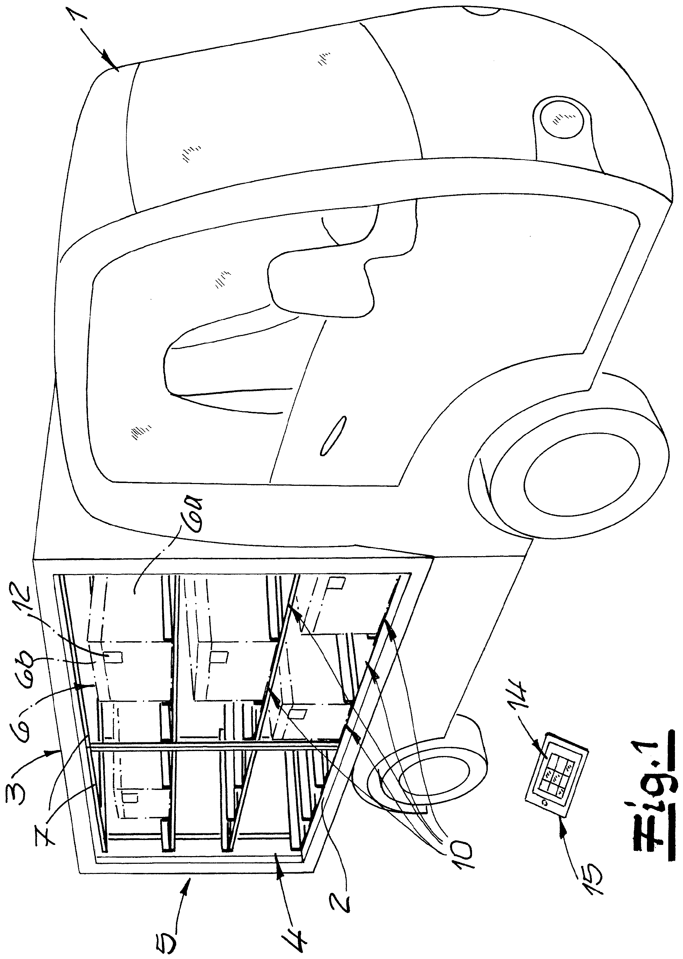

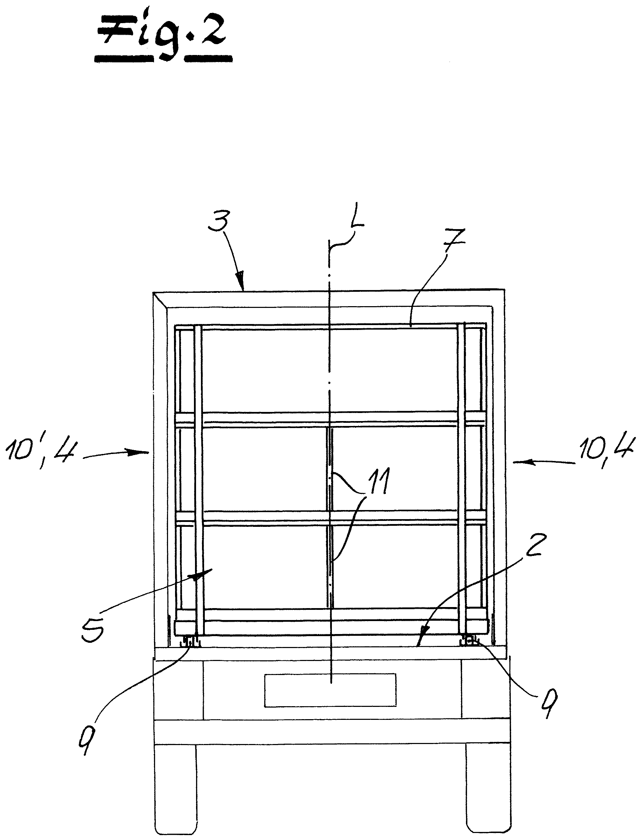

Man erkennt, dass die Schutzdächer 10, 10', jeweils quer zur Fahrzeuglängsrichtung und jeweils ausgehend von einer in den Figuren lediglich angedeuteten Fahrzeuglängsebene L sich gegenüberliegend in dem Rahmen 7 angeordnet sind. Dazu ist die Notation der Schubfächer 10, 10', entsprechend gewählt. Tatsächlich handelt es sich bei den Schubfächern 10 um diejenigen Schubfächer 10, die von der in Fig. 1 dargestellten Beifahrerseite her mit den Lieferboxen 6 ausgerüstet werden und die Lieferboxen 6 über diese Beifahrerseite aus dem Rahmen bzw. den Schubfächern 10 entnommen werden können. Demgegenüber korrespondieren die weiteren Schubfächer 10' zu den Schubfächern 10', die gegenüberliegend angeordnet sind und folglich von der Fahrerseite her entnommen werden müssen. Das gilt jedenfalls so lange, wie sich die Fahrerseite in Fahrtrichtung links des Lieferfahrzeuges befindet, was selbstverständlich nur beispielhaft gilt und keinesfalls zwingend ist.

Jedenfalls sind die Schubfächer 10, 10' jeweils quer zur Fahrzeuglängsrichtung und jeweils ausgehend von der Fahrzeuglängsebene L sich gegenüberliegend in dem Rahmen 7 angeordnet. Dazu wird die Fahrzeuglängsebene durch jeweils Anschlagstreben 11 im Rahmen 7 definiert, die das jeweilige Schubfach 10, 10' in seiner Länge quer zur Fahrzeuglängsrichtung begrenzen. Die Lieferboxen 6 sind darüber hinaus mit einem nur angedeuteten Identifizierungsmittel 12 ausgerüstet, welches im Ausführungsbeispiel im oder an dem Grundkörper 6a angebracht ist oder angebracht werden kann. Bei dem Indizierungsmittel 12 kann es sich im einfachsten Fall um ein Etikett handeln. Es sind aber auch alternativ oder zusätzlich elektronische Identifizierungsmittel 12 in diesem Zusammenhang denkbar, wie dies einleitend bereits beschrieben wurde.

Wie bereits erläutert, kann der mehrere Lieferboxen 6 aufnehmende Rahmen 7 auf der Ladefläche 2 positioniert gehalten und zur Kommissionierung mit den Lieferboxen 6 von der Ladefläche 2 wieder entfernt werden. Die Kommissionierung der Lieferboxen 6 erfolgt dabei typischerweise im Inneren des in der Fig. 3 angedeuteten Warenverteilungszentrums 8 als Kommissionierort. Erfindungsgemäß wird dies nun so vorgenommen und realisiert, dass die Lieferboxen 6 jeweils eine durch die Kommissionierung vorbestimmte Position im Rahmen 7 einnehmen. Die Kommissionierung der Lieferboxen 6 im Inneren des Rahmens 7 wird dabei mithilfe einer in der Fig. 3 angedeuteten Steuereinheit 13 vorgenommen.

Tatsächlich erkennt man in der Fig. 3 von der Steuereinheit 13 lediglich und beispielhaft einen Bildschirm, auf dem ein Positionsbelegungsplan 14 für die sämtlichen Lieferboxen 6 im Rahmen 7 wiedergegeben ist. Der Positionsbelegungsplan 14 für die Lieferboxen 6 ist dabei im einfachsten Fall so ausgelegt, dass die Lieferboxen 6 mit einer bestimmten Reihenfolge und folglich Rangfolge ausgerüstet werden, die sich in dem Positionsbelegungsplan 14 in Nummern niederschlägt. Tatsächlich erkennt man anhand der Fig. 3, dass der Positionsbelegungsplan 14 an dieser Stelle insgesamt 18 Schubfächer 10, 10', wiedergibt, und zwar jeweils neun Schubfächer 10 auf der in der Fig. 3 dargestellten Beifahrerseite und weitere neun Schubfächer 10', auf der gegenüberliegenden Fahrerseite.

Folgerichtig sind die Reihenfolgen der in den Schubfächern 10 auf der Beifahrerseite aufgenommenen Lieferboxen 6 mit den Zahlen 1 und 3 im Beispielfall wiedergegeben, wohingegen die Reihenfolge der Lieferboxen 6 auf der Fahrerseite die Nummern 2', 4', und 5', im Beispielfall tragen. Daraus resultiert eine bestimmte Entnahmereihenfolge derart, dass zunächst die Lieferbox 6 mit der Nummer 1 auf der Beifahrerseite entnommen wird. Anschließend die Lieferbox 6 mit der Nummer 2' auf der Fahrerseite. Dann erfolgt eine weitere Entnahme der Lieferbox 6 mit der Nummer 3 auf der Beifahrerseite und im Anschluss hieran eine Entnahme von zwei Lieferboxen 6 auf der Fahrerseite, und zwar mit den Nummern 4', und 5'. Das gilt selbstverständlich nur beispielhaft.

Die Steuereinheit 13 gibt dabei den Positionsbelegungsplan 14 nach der Fig. 3 anhand von Stammdaten für die auszuliefernden Waren ebenso wie Stammdaten der die Waren empfangenden Kunden vor. Außerdem werden hierbei Konstruktionsdaten des erfindungsgemäßen Lieferfahrzeuges berücksichtigt, beispielsweise die Lage seines in der Fig. 3 angedeuteten Schwerpunktes S (in unbeladenem Zustand).

Tatsächlich wird der Positionsbelegungsplan 14 der Lieferboxen 6 im Rahmen 7 in Abhängigkeit einer oder mehrerer Kommissionierkriterien erstellt, die in der Beschreibungseinleitung im Detail bereits beschrieben worden sind. Bei dem Kommissionierkriterium handelt es sich beispielhaft um das Gewicht der betreffenden Lieferbox 6.

Das Gewicht der Lieferbox 6 wird dabei aus dem Leergewicht der Lieferbox 6 (Tara) zuzüglich der in der Lieferbox 6 aufgenommenen Waren ermittelt. Da die einzelnen Kommissionierkriterien im Hinblick auf die Fahrdynamik des Lieferfahrzeuges priorisiert sind und darüber hinaus die Lieferbox 6 mit dem höchsten Gewicht ihre schwerpunktnächste Position im Positionsbelegungsplan 14 einnimmt, erklärt sich, dass nach dem zuvor bereits beschriebenen Beispiel die schwerste Lieferbox 6 mit der Nummer 1 die schwerpunktnächste Position belegt. Tatsächlich findet sich der Schwerpunkt S des Lieferfahrzeuges - wie in der Fig. 3 angedeutet - hinter der Fahrerkabine 1, unterhalb der Ladefläche 2 und im Frontbereich der betreffende Ladefläche 2 sowie zentral, das heißt auf bzw. in der Längsebene L.

Anhand des Positionsbelegungsplanes 14 nach der Fig. 3 erkennt man, dass die Lieferbox 6 mit dem zweithöchsten Gewicht im Beispielfall nicht auf der Beifahrerseite wie die Lieferbox 6 mit der Nummer 1 ihre Anordnung im Positionsbelegungsplan 14 findet, sondern vielmehr auf der Fahrerseite mit der Nummer 2'. Dadurch trägt die Erfindung zusätzlich dem Umstand Rechnung, dass die Reihenfolge der Entladung der Lieferboxen 6 jeweils wechselweise rechts und links der betreffenden (Fahrzeug) Längsebene L erfolgt und folglich die Lieferboxen 6 auch entsprechend auf der Beifahrerseite (rechts) bzw. der Fahrerseite (links) entsprechend ihre Position im Positionsbelegungsplan 14 einnehmen.

Der in der Fig. 3 beispielhaft und vereinfacht dargestellte Positionsbelegungsplan 14 wird dabei nicht nur in der Steuereinheit 13 am Kommissionierort bzw. im oder am Warenverteilungszentrum 8 des Warenhändlers hinterlegt. Sondern im Rahmen des Ausführungsbeispiels findet sich der Positionsbelegungsplan 14 auch in einer lediglich in der Fig. 1 angedeuteten und zusätzlich vorgesehenen mobilen Steuereinheit 15. Diese mobile Steuereinheit 15 kann als Tablet, Smartphone etc. ausgebildet sein und wird typischerweise von dem Fahrer mitgeführt, kann ergänzend oder alternativ aber auch im Inneren der Lieferkabine 1 oder sonst wo im oder am fraglichen Lieferfahrzeug ihren Platz finden. Mithilfe des zusätzlich in der mobilen und/oder fahrzeuggebundenen Steuereinheit 15 hinterlegten Positionsbelegungsplans 14 ist der Fahrer unschwer in der Lage, die im Positionsbelegungsplan 14 hinterlegte Reihenfolge bei der Entnahme der einzelnen Lieferboxen 6 aus dem Rahmen 7 jeweils umzusetzen und einzuhalten. Als Folge hiervon ist damit zu rechnen, dass der Schwerpunkt S des Lieferfahrzeuges nicht nur in vollbeladenem Zustand, sondern auch während des Entladevorganges im Wesentlichen seine in der Fig. 3 angedeutete Position beibehält, so dass etwaige negative Auswirkungen auf die Fahrdynamik des Lieferfahrzeuges erfindungsgemäß ausdrücklich vermieden werden. Zugleich reflektiert der Positionsbelegungsplan 14 eine besonders ergonomische Entnahme der einzelnen Lieferboxen 3 am zugehörigen Bestimmungsort bzw. am Ort des Kunden, wie dies einleitend bereits beschrieben wurde.

Anhand der Fig. 3 erkennt man, dass der Rahmen 7 zur Aufnahme auf der Transportfläche 2 des Lieferfahrzeuges am Kommissionierort bzw. im oder am Warenverteilungszentrum 8 bestückt und als Ganzes nach der Bestückung in das im Endeffekt auf der Ladefläche 2 vorhandene Transportgestell 2, 3 auf der Ladefläche 2 eingeschoben wird. Tatsächlich handelt es sich bei dem Transportgestell 2, 3 um den zuvor bereits angesprochenen offenen Kofferaufbau auf der Ladefläche 2, welcher im Wesentlichen die Ladefläche 2 und die durchgehende Dachfläche 3 mit entsprechenden Verbindungsstreben umfasst.

Für die Bestückung der Ladefläche 2 ist der Rahmen 7 mit den unterseitigen Transportrollen 9 ausgerüstet, kann folglich schiebend oder auch anderweitig auf die Ladefläche 2 verbracht und auf der Ladefläche 2 verriegelt werden, um etwaige Bewegungen des Rahmens 7 während des Transportes gegenüber dem Transportgestell 2, 3 zu verhindern. Selbstverständlich ist die Verriegelung lösbar ausgebildet, um den Rahmen 7 nach der Auslieferung von der Ladefläche 2 zu entnehmen und anschließend mit neuen Lieferboxen 6 zu bestücken.

## Patentansprüche

1. Lieferfahrzeug, insbesondere bemanntes oder unbemanntes Elektro-Lieferfahrzeug, zur Auslieferung von Waren, insbesondere Lebensmittelwaren, in Lieferboxen (6), mit einer Ladefläche (2), und mit wenigstens einem mehrere Lieferboxen (6) aufnehmenden Rahmen (7), welcher auf der Ladefläche (2) positioniert gehalten und zur Kommissionierung mit den Lieferboxen (6) von der Ladefläche (2) wieder entfernt werden kann, wobei
die Lieferboxen (6) jeweils eine durch die Kommissionierung vorbestimmte Position im Rahmen (7) einnehmen, wobei ferner
die Kommissionierung ganz oder teilweise mithilfe einer Steuereinheit (13) vorgegeben wird, und wobei
die Kommissionierung einen Positionsbelegungsplan (14) für sämtliche Lieferboxen (6) im Rahmen (7) vorgibt,
**dadurch gekennzeichnet, dass**
die Steuereinheit (13) den Positionsbelegungsplan (14) anhand von Stammdaten für die auszuliefernden Waren ebenso wie Stammdaten der die Waren empfangenden Kunden vorgibt, wobei
hierbei zusätzlich Konstruktionsdaten des Lieferfahrzeuges berücksichtigt werden, nämlich die Lage seines Schwerpunktes in unbeladenem Zustand, und wobei
der Positionsbelegungsplan (14) mit höchster Priorität so aufgestellt wird, dass die Lieferboxen (6) mit größtem Gewicht die schwerpunktnächste oder zumindest fahrbahnnächste Position im Positionsbelegungsplan (14) einnehmen.

2. Fahrzeug nach Anspruch 1, **dadurch gekennzeichnet, dass** der Positionsbelegungsplan (14) der Lieferboxen (6) in Abhängigkeit mehrerer Kommissionierkriterien erstellt wird.

3. Fahrzeug nach Anspruch 1 oder 2, **dadurch gekennzeichnet, dass** als Kommissionierkriterien das Gewicht der Lieferbox (6), die Reihenfolge der Entladung der Lieferbox (6), der Bestimmungsort der Lieferung, die Ausrichtung der Lieferbox (6) am Bestimmungsort, der Zeitpunkt der Entladung der Lieferbox (6), die Haltbarkeit der Ware in der Lieferbox (6), etwaige Einschränkungen der Lieferzeit am Bestimmungsort etc. einzeln oder kumulativ berücksichtigt werden.

4. Fahrzeug nach Anspruch 2 oder 3, **dadurch gekennzeichnet, dass** die einzelnen Kommissionierkriterien im Hinblick auf die Fahrdynamik des Lieferfahrzeuges priorisiert sind.

5. Fahrzeug nach Anspruch 1 bis 4, **dadurch gekennzeichnet, dass** die Lieferboxen (6) je nach der Reihenfolge ihrer Entladung jeweils wechselweise rechts und links einer Fahrzeuglängsebene (L) ihre Position im Positionsbelegungsplan (14) einnehmen.

6. Fahrzeug nach einem der Ansprüche 1 bis 5, **dadurch gekennzeichnet, dass** der Positionsbelegungsplan (14) in der Steuereinheit (13) am Kommissionierort und zusätzlich in einer mobilen und/oder fahrzeuggebundenen Steuereinheit (15) hinterlegt ist.

7. Fahrzeug nach einem der Ansprüche 1 bis 6, **dadurch gekennzeichnet, dass** der Rahmen (7) am Kommissionierort mit den Lieferboxen (6) bestückt und als Ganzes nach der Bestückung in ein Transportgestell (2, 3) auf der Ladefläche (2) eingeschoben wird.

8. Fahrzeug nach einem der Ansprüche 1 bis 7, **dadurch gekennzeichnet, dass** der Rahmen (7) unterseitige Transportrollen (9) und Schubfächer (10, 10') zur Aufnahme der Lieferboxen (6) aufweist.

9. Fahrzeug nach einem der Ansprüche 1 bis 8, **dadurch gekennzeichnet, dass** die Schubfächer (10, 10') jeweils quer zur Fahrzeuglängsrichtung und jeweils ausgehend von der Fahrzeuglängsebene (L) sich gegenüberliegend im Rahmen (7) angeordnet sind.

10. Fahrzeug nach einem der Ansprüche 1 bis 9, **dadurch gekennzeichnet, dass** die jeweilige Lieferbox (6) mit einem Identifikationsmittel (12) ausgerüstet ist.

11. Verfahren zur Auslieferung von Waren, insbesondere Lebensmittelwaren, mithilfe eines Lieferfahrzeuges, vorzugsweise eines bemannten oder unbemannten Elektro-Lieferfahrzeuges, wobei das Lieferfahrzeug mit einer Ladefläche (2) und wenigstens eine oder mehrere Lieferboxen (6) aufnehmenden Rahmen (7) ausgerüstet ist, wobei ferner der Rahmen (7) auf der Ladefläche (2) positioniert gehalten und zur Kommissionierung mit den Lieferboxen (6) von der Ladefläche (2) wieder entfernt werden kann, wonach
die Lieferboxen (6) jeweils eine durch die Kommissionierung vorbestimmte Position im Rahmen (7) einnehmen, wonach ferner
die Kommissionierung ganz oder teilweise mithilfe einer Steuereinheit (13) vorgegeben wird, und wonach
die Kommissionierung einen Positionsbelegungsplan (14) für sämtliche Lieferboxen (6) im Rahmen (7) vorgibt,
**dadurch gekennzeichnet, dass**
die Steuereinheit (13) den Positionsbelegungsplan (14) anhand von Stammdaten für die auszuliefernden Waren ebenso wie Stammdaten der die Waren empfangenden Kunden vorgibt, wobei
hierbei zusätzlich Konstruktionsdaten des Lieferfahrzeuges berücksichtigt werden, nämlich die Lage seines Schwerpunktes in unbeladenem Zustand, und wobei
der Positionsbelegungsplan (14) mit höchster Priorität so aufgestellt wird, dass die Lieferboxen (6) mit größtem Gewicht die schwerpunktnächste oder zumindest fahrbahnnächste Position im Positionsbelegungsplan (14) einnehmen.

## Claims

1. A delivery vehicle, in particular manned or unmanned electric delivery vehicle, for delivering goods, in particular food products, in delivery boxes (6), comprising a loading platform (2), and comprising at least one frame (7) receiving several delivery boxes (6), which can be held so as to be positioned on the loading platform (2) and can be removed from the loading platform (2) again with the delivery boxes (6) for commissioning purposes, wherein
the delivery boxes (6) each assume a position in the frame (7), which is predetermined by the commissioning, wherein
the commissioning is further specified completely or partially with the help of a control unit (13), and wherein
the commissioning specifies a position occupancy plan (14) for all delivery boxes (6) in the frame (7),
wherein
the control unit (13) specifies the position occupancy plan (14) based on master data for the goods to be delivered as well as master data of the customers receiving the goods, **characterized in that** additional construction data of the delivery vehicle is considered thereby, namely the position of its center of gravity in the unloaded state, and
that the position occupancy plan (14) is prepared with the highest priority so that the delivery boxes (6) with the highest weight assume the position closest to the center of gravity in the position occupancy plan (14) .

2. The vehicle according to claim 1, **characterized in that** the position occupancy plan (14) of the delivery boxes (6) is prepared as a function of several commissioning criteria.

3. The vehicle according to claim 1 or 2, **characterized in that** the weight of the delivery box (6), the order of the unloading of the delivery box (6), the destination of the delivery, the alignment of the delivery box (6) at the destination, the time of unloading of the delivery box (6), the shelf life of the goods in the delivery box (6), possible limitations of the delivery time at the destination, etc., are considered individually or cumulatively as commissioning criteria.

4. The vehicle according to claim 2 or 3, **characterized in that** the individual commissioning criteria are prioritized with regard to the driving dynamics of the delivery vehicle.

5. The vehicle according to claim 1 to 4, **characterized in that** the delivery boxes (6) each alternately assume their position in the position occupancy plan (14) to the right and to the left of a vehicle longitudinal plane (L), each depending on the order of their unloading.

6. The vehicle according to one of claims 1 to 5, **characterized in that** the position occupancy plan (14) is stored in the control unit (13) at the commissioning location and additionally in a mobile and/or vehicle-bound control unit (15).

7. The vehicle according to one of claims 1 to 6, **characterized in that** the frame (7) is equipped with the delivery boxes (6) at the commissioning location and is inserted as a whole after the equipping into a transport frame (2, 3) on the loading platform (2).

8. The vehicle according to one of claims 1 to 7, **characterized in that** the frame (7) has underside transport rollers (9) and drawers (10, 10') for receiving the delivery boxes (6).

9. The vehicle according to one of claims 1 to 8, **characterized in that** the drawers (10, 10') are each arranged transversely to the vehicle longitudinal direction and each opposite one another in the frame (7), starting at the vehicle longitudinal plane (L).

10. The vehicle according to one of claims 1 to 9, **characterized in that** the respective delivery box (6) is equipped with an identification means (12).

11. A method for delivering goods, in particular food products, with the help of a delivery vehicle, preferably a manned or unmanned electric delivery vehicle, wherein the delivery vehicle is equipped with a loading platform (2) and at least one frame (7) receiving one or several delivery boxes (6), wherein the frame (7) can further be held so as to be positioned on the loading platform (2) and can be removed from the loading platform (2) again with the delivery boxes (6) for commissioning purposes, whereafter
the delivery boxes (6) each assume a position in the frame (7), which is predetermined by the commissioning, whereafter
the commissioning is further specified completely or partially with the help of a control unit (13), and whereafter the commissioning specifies a position occupancy plan (14) for all delivery boxes (6) in the frame (7),
wherein
the control unit (13) specifies the position occupancy plan (14) based on master data for the goods to be delivered as well as master data of the customers receiving the goods, **characterized in**
**that** additional construction data of the delivery vehicle is considered thereby, namely the position of its center of gravity in the unloaded state, and
**that** the position occupancy plan (14) is prepared with the highest priority so that the delivery boxes (6) with the highest weight assume the position closest to the center of gravity in the position occupancy plan (14) .

## Revendications

1. Véhicule de livraison, notamment véhicule de livraison électrique avec ou sans présence humaine, destiné à livrer des produits, notamment des produits alimentaires dans des boîtes de livraison (6), pourvu d'une surface de chargement (2), et pourvu d'au moins un châssis (7), réceptionnant plusieurs boîtes de livraison (6), lequel est maintenu en étant positionné sur la surface de chargement (2) et pour le commissionnage, peut se retirer avec les boîtes de livraison (6) de la surface de chargement (2),
les boîtes de livraison (6) adoptant chacune une position prédéfinie dans le châssis (7) pour le commissionnage, par ailleurs,
le commissionnage étant prédéfini totalement ou partiellement à l'aide d'une unité de commande (13), et
le commissionnage prédéfinissant un plan d'occupation des positions (14) pour toutes les boîtes de livraison (6) dans le châssis (7),
l'unité de commande (13) prédéfinissant le plan d'occupation des positions (14) à l'aide de données de base pour les produits qui doivent être livrés, tout comme de données de base pour les clients recevant les produits, **caractérisé en ce qu'**à cet effet sont prises en compte en sus des données structurelles du véhicule de livraison, à savoir l'emplacement de son centre de gravité lorsqu'il n'est pas chargé et
**en ce que** le plan d'occupation des positions (14) est établi avec une priorité maximale, de telle sorte que les boîtes de livraison (6) présentant le poids le plus important adoptent la position la plus proche du centre de gravité dans le plan d'occupation des positions (14).

2. Véhicule selon la revendication 1, **caractérisé en ce que** le plan d'occupation des positions (14) des boîtes de livraison (6) est établi en fonction de plusieurs critères de commissionnage.

3. Véhicule selon la revendication 1 ou 2, **caractérisé en ce qu'**en tant que critères de commissionnage sont pris en compte à titre individuel ou cumulatif le poids de la boîte de livraison (6), l'ordre chronologique du déchargement de la boîte de livraison (6), le lieu de destination de la livraison, l'orientation de la boîte de livraison (6) sur son lieu de destination, le moment du déchargement de la boîte de livraison (6), la conservabilité du produit dans la boîte de livraison (6), d'éventuelles restrictions au niveau de l'heure de livraison sur le lieu de destination, etc.

4. Véhicule selon la revendication 2 ou 3, **caractérisé en ce que** les critères de commissionnage sont priorisés au regard de la dynamique de conduite du véhicule de livraison.

5. Véhicule selon la revendication 1 à 4, **caractérisé en ce qu'**en fonction de l'ordre chronologique de leur déchargement, les boîtes de livraison (6) adoptent chaque fois alternativement à droite et à gauche d'un plan longitudinal (L) du véhicule leur position dans le plan d'occupation des positions (14).

6. Véhicule selon l'une quelconque des revendications 1 à 5, **caractérisé en ce que** le plan d'occupation des positions (14) est sauvegardé dans l'unité de commande (13), sur le lieu de commissionnage et en sus dans une unité de commande (15) mobile ou embarquée dans le véhicule.

7. Véhicule selon l'une quelconque des revendications 1 à 6, **caractérisé en ce que** l'on équipe le châssis (7) avec les boîtes de livraison (6) sur le lieu de commissionnage et après l'équipement, on l'insère en tant qu'entité dans un châssis de transport (2, 3) sur la surface de chargement (2).

8. Véhicule selon l'une quelconque des revendications 1 à 7, **caractérisé en ce que** le châssis (7) comporte des roulettes de transport (9) inférieures et des tiroirs (10, 10') destinés à recevoir les boîtes de livraison (6) .

9. Véhicule selon l'une quelconque des revendications 1 à 8, **caractérisé en ce que** les tiroirs (10, 10') sont placés chacun à la transversale de la direction longitudinale du véhicule et chaque fois en vis-à-vis mutuel dans le châssis (7), en partant du plan longitudinal (L) du véhicule.

10. Véhicule selon l'une quelconque des revendications 1 à 9, **caractérisé en ce que** la boîte de livraison (6) respective est équipée d'un moyen d'identification (12) .

11. Procédé, destiné à livrer des produits, notamment des produits alimentaires, à l'aide d'un véhicule de livraison, de préférence, d'un véhicule de livraison électrique, avec ou sans présence humaine, le véhicule de livraison étant équipé d'une surface de chargement (2) et d'un châssis (7) recevant au moins une ou plusieurs boîtes de livraison (6), par ailleurs, le châssis (7) étant maintenu en étant positionné sur la surface de chargement (2) et pour le commissionnage, pour être de nouveau retiré avec les boîtes de livraison (6) de la surface de chargement (2), suite à quoi
les boîtes de livraison (6) adoptent chacune un position prédéfinie par le commissionnage dans le châssis (7), suite à quoi, par ailleurs
le commissionnage est prédéfini totalement ou partiellement à l'aide d'une unité de commande (13) et suite à quoi le commissionnageprédéfinit un plan d'occupation des positions (14) pour l'ensemble des boîtes de livraison (6) dans le châssis (7),
l'unité de commande (13) prédéfinissant le plan d'occupation des positions (14) à l'aide de données de base pour les produits qui doivent être livrés, ainsi que des données de base des clients recevant les produits, **caractérisé**
**en ce qu'**à cet effet, en sus des données structurelles du véhicule de livraison sont prises en considération, à savoir l'emplacement de son centre de gravité lorsqu'il n'est pas chargé et
**en ce que** le plan d'occupation des positions (14) est établi avec une priorité maximale, de telle sorte que les boîtes de livraison (6) présentant le poids le plus important adoptent la position la plus proche du centre de gravité dans le plan d'occupation des positions (14).
